# FASCICULE DE BREVET EUROPEEN

(11) **EP 3 352 997 B1**
(45) Date de publication et mention de la délivrance du brevet: **21.08.2019**
(21) Numéro de dépôt: 16777587.3
(22) Date de dépôt: 23.09.2016
(51) Int. Cl.: B60C 1/00, C08L 7/00, C08L 9/00, C08L 9/06, C08L 61/14, C07F 7/18, C08G 59/00

(54) **UTILISATION D'UN DÉRIVÉ DE POLYPHÉNOL AROMATIQUE SILYLÉ POUR LA FABRICATION D'UNE RÉSINE PHÉNOL-ALDÉHYDE DE RENFORCEMENT D'UNE COMPOSITION DE CAOUTCHOUC**
VERWENDUNG EINES SILYLIERTEN AROMATISCHEN POLYPHENOLDERIVATS ZUR HERSTELLUNG EINES PHENOL-ALDEHYD-HARZES ZUR VERSTÄRKUNG EINER KAUTSCHUKZUSAMMENSETZUNG
USE OF A SILYLATED AROMATIC POLYPHENOL DERIVATIVE FOR THE PRODUCTION OF A PHENOL-ALDEHYDE RESIN FOR REINFORCEMENT OF A RUBBER COMPOSITION

(30) Priorité: 25.09.2015 FR 1559070; 25.09.2015 FR 1559073
(43) Date de publication de la demande: 01.08.2018
(73) Titulaire: Compagnie Générale des Etablissements Michelin, 63000 Clermont-Ferrand (FR)
(72) Inventeur: THUILLIEZ, Anne-Lise, 63040 Clermont-Ferrand Cedex 9 (FR); GAVARD-LONCHAY, Odile, 63040 Clermont-Ferrand Cedex 9 (FR); LOUBAT, Cédric, 34160 Castries (FR); BOUTEVIN, Gilles, 34160 Castries (FR)
(74) Mandataire: Desbordes, Guillaume
(86) Numéro de dépôt international: PCT/EP2016/072653
(87) Numéro de publication internationale: WO 2017/050953

(56) Documents cités:
- EP-A2- 0 311 371
- WO-A2-02/10269
- CN-A- 101 691 419

## Description

L'invention concerne l'utilisation d'un dérivé de polyphénol aromatique pour la fabrication d'une résine phénol-aldéhyde de renforcement d'une composition de caoutchouc.

Il est connu d'utiliser dans certaines parties des pneumatiques, des compositions de caoutchouc présentant une forte rigidité lors de faibles déformations du pneumatique. La résistance aux faibles déformations est une des propriétés que doit présenter un pneumatique pour répondre aux sollicitations auxquelles il est soumis.

Une forte rigidité peut être obtenue en utilisant un système de vulcanisation dit concentré, c'est-à-dire comprenant notamment des taux de soufre et d'accélérateur de vulcanisation relativement élevés.

Toutefois, un tel système de vulcanisation concentré pénalise le vieillissement à cru de la composition. Ainsi, lorsque la composition est sous forme de produit semi-fini, par exemple de bande de gomme, le soufre peut migrer en surface du produit semi-fini. Ce phénomène, appelé effleurissement, entraine une pénalisation du collant à cru du produit semi-fini lors de son stockage prolongé, avec pour conséquence une dégradation de l'adhésion entre les produits semi-finis lors de la fabrication du pneumatique.

Par ailleurs, le stockage de la composition crue contenant un système de vulcanisation concentré est susceptible d'entrainer une diminution de la phase retard de la composition lors de sa vulcanisation, c'est-à-dire le temps précédant le début de la vulcanisation. En conséquence, la composition peut commencer à cuire prématurément dans certains outils de mise en forme et la cinétique de vulcanisation est susceptible d'être modifiée et le rendement de vulcanisation d'être dégradé.

Un tel système de vulcanisation concentré pénalise également le vieillissement à cuit. En effet, on observe une dégradation des propriétés mécaniques de la composition cuite, notamment aux limites, par exemple de l'allongement à rupture.

Une forte rigidité peut autrement être obtenue en augmentant le taux de charge renforçante.

Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant et ainsi préserver l'environnement.

Enfin, une rigidité élevée peut être obtenue en incorporant certaines résines renforçantes comme divulgué dans WO 02/10269.

Classiquement l'augmentation de la rigidité est obtenue en incorporant des résines renforçantes à base d'un système accepteur/donneur de méthylène. Les termes « accepteur de méthylène » et « donneur de méthylène » sont bien connus de l'homme du métier et largement utilisés pour designer des composés aptes à réagir ensemble pour générer par condensation une résine renforçante tridimensionnelle qui vient se superposer et s'interpénétrer avec le réseau charge renforçante/élastomère d'une part et, avec le réseau élastomère/soufre d'autre part (si l'agent de réticulation est le soufre). A l'accepteur de méthylène est associé un agent durcisseur, apte à le réticuler ou le durcir, encore appelé communément donneur de méthylène. Des exemples de tels accepteur et donneur de méthylène sont décrits dans WO 02/10269.

Les donneurs de méthylène classiquement utilisés dans les compositions de caoutchouc pour pneumatiques sont l'hexa-méthylènetétramine (en abrégé HMT), ou l'hexamethoxyméthylmélamine (en abrégé HMMM ou H3M), ou l'hexaethoxyméthylmélamine.

Les accepteurs de méthylène classiquement utilisés dans les compositions de caoutchouc pour pneumatiques sont des résines phénoliques précondensées.

Toutefois, la combinaison de résine phénolique classiquement utilisée en tant qu'accepteur de méthylène avec l'HMT ou l'H3M en tant que donneur de méthylène, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental de ces composés et de l'évolution récente de la réglementation, notamment la réglementation européenne, sur ce type de composé.

L'invention a pour but de permettre de renforcer des compositions de caoutchouc au moyen de composés à faible impact environnemental.

A cet effet, l'invention a pour objet l'utilisation d'un dérivé de polyphénol aromatique comprenant au moins un noyau aromatique porteur d'au moins deux groupes -O-Z en position méta l'un par rapport à l'autre, les deux positions ortho d'au moins un des groupes - O-Z étant non substituées, et dans lequel chaque groupe -O-Z représente un groupe -O-Si(R₁R₂R₃) avec R₁, R₂, R₃ représentant, indépendamment l'un de l'autre, un radical hydrocarboné ou un radical hydrocarboné substitué pour la fabrication d'une résine phénol-aldéhyde de renforcement d'une composition de caoutchouc.

La combinaison du dérivé de polyphénol aromatique et de l'aldéhyde permet d'obtenir des compositions de caoutchouc présentant une rigidité à basse déformation équivalente voire largement améliorée par rapport aux compositions de caoutchouc classiques qui comprennent des donneurs de méthylène HMT ou H3M et par rapport aux compositions de caoutchouc dépourvues de résine renforçante, et donc de renforcer la composition de caoutchouc dans laquelle la résine phénol-aldéhyde renforçante s'est fabriquée ou formée (les deux termes étant équivalents) lors de la réticulation de la composition de caoutchouc.

Conformément à l'invention, la résine phénol-aldéhyde renforçante est à base du dérivé de polyphénol aromatique et d'un aldéhyde et se fabrique in-situ, par réticulation, dans la composition de caoutchouc, notamment lors de la réticulation de cette composition de caoutchouc, par exemple par vulcanisation ou cuisson.

Les Demanderesses ont découvert lors de leurs recherches que les dérivés de polyphénol aromatique selon l'invention permettent avantageusement d'éviter une réticulation précoce d'une résine phénol-aldéhyde à base de ce dérivé de polyphénol aromatique et d'un aldéhyde. En effet, un problème lié à l'utilisation de certaines résines renforçantes, notamment celles à base du polyphénol aromatique et de l'aldéhyde est leur capacité à réticuler de façon précoce. En effet, après l'étape de fabrication de la composition comprenant les constituants de ces résines renforçantes à base du polyphénol aromatique et de l'aldéhyde correspondants, la composition est mise en forme par exemple par calandrage, par exemple sous la forme d'une feuille, d'une plaque, ou encore extrudée, par exemple pour former un profilé de caoutchouc. Or, en raison de leur capacité à réticuler rapidement, ces résines renforçantes à base du polyphénol aromatique et de l'aldéhyde correspondants réticulent et rigidifient la composition, ce qui peut gêner la mise en forme de la composition de caoutchouc.

En effet, le dérivé de polyphénol aromatique et l'aldéhyde réagissent moins rapidement que le polyphénol aromatique et l'aldéhyde correspondants. Cette vitesse de réaction peut être déterminée en mesurant l'évolution du couple rhéométrique en fonction du temps. Cette évolution décrit la rigidification de la composition par suite notamment de la réticulation de la résine phénol-aldéhyde. De la comparaison de l'évolution des couples rhéométriques d'une première composition comprenant le dérivé de polyphénol aromatique et l'aldéhyde et d'une deuxième composition comprenant le polyphénol aromatique et l'aldéhyde correspondants, on voit que le dérivé de polyphénol aromatique permet de retarder la réticulation de la résine phénol-aldéhyde par rapport à la réaction directe entre le polyphénol aromatique et l'aldéhyde.

Les inventeurs à l'origine de l'invention émettent l'hypothèse que le dérivé de polyphénol aromatique selon l'invention est un précurseur du polyphénol aromatique correspondant et que ce dernier permet d'éviter une réticulation précoce de la résine phénol-aldéhyde en raison du radical Z de chaque groupe -O-Z qui est différent de l'hydrogène. En effet, le radical Z de chaque groupe -O-Z agirait comme un groupe protecteur temporaire permettant, selon l'hypothèse des inventeurs, la formation d'une fonction hydroxyle dans des conditions réactionnelles prédéterminées et donc la formation du polyphénol aromatique correspondant. Les conditions réactionnelles prédéterminées dans lesquelles cette formation est possible dépendent de plusieurs paramètres tels que la pression, la température ou encore les espèces chimiques présentes dans le milieu réactionnel. Ces conditions réactionnelles sont fonction du groupe -O-Z et sont facilement déterminables, voire connues de l'homme du métier. Par exemple, de telles conditions réactionnelles sont le chauffage de la composition de caoutchouc à une température supérieure ou égale à 80°C, de préférence à 100°C et plus préférentiellement à 120°C

Ainsi, le dérivé de polyphénol aromatique selon l'invention et l'aldéhyde peuvent réagir moins rapidement que le polyphénol aromatique et l'aldéhyde correspondants. Cette vitesse de réaction peut être déterminée en mesurant l'évolution du couple rhéométrique en fonction du temps. Cette évolution décrit la rigidification de la composition par suite notamment de la réticulation de la résine phénol-aldéhyde. De la comparaison de l'évolution des couples rhéométriques d'une première composition comprenant le dérivé de polyphénol aromatique selon l'invention et l'aldéhyde et d'une deuxième composition comprenant le polyphénol aromatique et l'aldéhyde correspondants, on voit que le dérivé de polyphénol aromatique selon l'invention permet de retarder la réticulation de la résine phénol-aldéhyde par rapport à la réaction directe entre le polyphénol aromatique et l'aldéhyde.

Le groupe -O-Z est tel que la réaction entre le dérivé de polyphénol aromatique selon l'invention et l'aldéhyde permet la réticulation d'une résine phénol-aldéhyde. De préférence, le groupe -O-Z est tel que la réaction entre le dérivé de polyphénol aromatique selon l'invention et l'aldéhyde permet la réticulation d'une résine phénol-aldéhyde dans les mêmes conditions réactionnelles, de préférence les mêmes conditions réactionnelles de température, qu'une résine phénol-aldéhyde à base du polyphénol aromatique correspondant (comportant des groupes hydroxyles à la place des groupes -O-Z) et du même aldéhyde. De façon classique, la température est supérieure ou égale à 120°C, de préférence supérieure ou égale à 140°C.

De plus, la combinaison spécifique de l'aldéhyde et du dérivé de polyphénol aromatique selon l'invention permet d'obtenir un excellent maintien de rigidité de la composition de caoutchouc avec l'augmentation de la température, ce maintien étant supérieur dans la plupart des modes de réalisation, à celui des compositions de caoutchouc dépourvues de résine renforçante. La combinaison spécifique de l'aldéhyde et de ce dérivé de polyphénol aromatique permet également d'obtenir un excellent maintien de rigidité de la composition de caoutchouc avec l'augmentation de la température, ce maintien étant équivalent, voire supérieur dans certains modes de réalisation, à celui des compositions de caoutchouc classiques qui comprennent des donneurs de méthylène HMT ou H3M. Comme déjà expliqué ci-dessus, les inventeurs à l'origine de l'invention émettent l'hypothèse que le dérivé de polyphénol aromatique selon l'invention (comportant des groupes hydroxyles à la place des groupes -O-Z) est un précurseur du polyphénol aromatique correspondant. Comme déjà expliqué ci-dessus, cela permet d'éviter une réticulation immédiate de la résine phénol-aldéhyde en raison d'une réaction qui générerait, en différé, la fonction les fonctions hydroxyles à partir du dérivé de polyphénol aromatique (comportant des groupes hydroxyles à la place des groupes -O-Z). En effet, les groupes -O-Z agiraient comme des groupes protecteurs temporaires permettant, selon l'hypothèse des inventeurs, la formation de fonctions hydroxyles dans des conditions réactionnelles prédéterminées (en d'autres termes la régénération du polyphénol aromatique correspondant au dérivé). Le temps mis pour régénérer le polyphénol aromatique, même en étant très court, par exemple de l'ordre de la minute, permettrait une meilleure dispersion de l'aldéhyde et du dérivé de polyphénol aromatique (comportant des groupes hydroxyles à la place des groupes -O-Z) dans le mélange réactionnel ce qui permettrait d'obtenir une résine phénol-aldéhyde présentant une réticulation plus homogène et donc une meilleure tenue en température de la résine phénol-aldéhyde.

La dénomination « dérivé de polyphénol aromatique » est utilisée en raison de la similitude structurelle existante entre ce composé appelé « dérivé de polyphénol aromatique » et le polyphénol aromatique correspondant. En effet, le dérivé de polyphénol aromatique est un composé présentant une structure analogue à celle du polyphénol aromatique correspondant mais dans lequel l'hydrogène d'au moins deux fonctions hydroxyles est remplacé par le radical Z.

On peut ainsi définir une formule générale (**W**) pour le dérivé de polyphénol aromatique selon l'invention représentée ci-dessous : 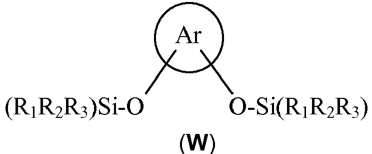 dans laquelle Ar est le noyau aromatique.

Par dérivé de polyphénol aromatique selon l'invention, il ne faut pas comprendre qu'il puisse s'agir d'une résine pré-condensée qui comprendrait des fonctions hydroxyles permettant la réaction avec l'aldéhyde. Dans certains modes de réalisation préférentiels, tous les groupes -O-Z sont identiques. Toutefois, dans d'autres modes de réalisation, au moins deux groupes -O-Z sont différents.

En tant que groupe protecteur temporaire, chaque groupe -O-Z est préférentiellement dépourvu de fonction réactive vis-à-vis de l'aldéhyde. Dans les différents modes de réalisations décrits, chaque radical R₁, R₂ et R₃, est préférentiellement dépourvu de fonction réactive vis-à-vis de l'aldéhyde.

En tant que groupe protecteur temporaire, chaque groupe -O-Z est préférentiellement dépourvu de fonction réactive vis-à-vis des autres constituants de la composition de caoutchouc. Dans les différents modes de réalisations décrits, chaque radical R₁, R₂ et R₃ est préférentiellement dépourvu de fonction réactive vis-à-vis des autres constituants de la composition de caoutchouc.

Par fonction réactive, on entend ici une fonction qui réagirait dans des conditions réactionnelles nécessaires à la régénération du polyphénol aromatique et dans des conditions réactionnelles nécessaires à la réticulation de la résine phénol-aldéhyde.

De préférence, la masse molaire de chaque groupe -O-Z est inférieure ou égale à 1000 g.mol⁻¹. Typiquement, la masse molaire de chaque groupe -O-Z est comprise entre 15 g.mol⁻¹ et 1000 g.mol⁻¹, préférentiellement entre 15 g.mol⁻¹ et 500 g.mol⁻¹.

Par "position méta l'une par rapport à l'autre", on entendra que les groupes -O-Z sont portées par des carbones du noyau aromatique séparés l'un de l'autre par un unique autre carbone du noyau aromatique.

Par "en position ortho d'un groupe", on entendra la position occupée par le carbone du noyau aromatique immédiatement adjacent au carbone du noyau aromatique portant le groupe.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

Par l'expression « résine à base de », il faut bien entendu comprendre une résine comportant le mélange et/ou le produit de réaction des différents constituants de base utilisés pour cette résine, certains d'entre eux pouvant être destinés à réagir ou susceptibles de réagir entre eux ou avec leur environnement chimique proche, au moins en partie, lors des différentes phases du procédé de fabrication de la composition, des composites ou du pneumatique, en particulier au cours d'une étape de cuisson. Ainsi, on pourra également prévoir que l'aldéhyde est issu d'un précurseur de cet aldéhyde. Par exemple, dans le cas où on utiliserait comme aldéhyde le formaldéhyde, un précurseur du formaldéhyde serait la hexa-méthylènetétramine (HMT).

Ainsi, l'invention permet de fabriquer une composition de caoutchouc comprenant au moins une résine phénol-aldéhyde à base d'au moins un dérivé de polyphénol aromatique selon l'invention et d'au moins un aldéhyde.

L'invention permet également de fabriquer une composition de caoutchouc comprenant au moins un dérivé de polyphénol aromatique selon l'invention et au moins un aldéhyde.

L'invention peut également permettre de mettre en oeuvre un procédé de fabrication d'une composition de caoutchouc, comprenant une étape de mélangeage d'au moins un dérivé de polyphénol aromatique selon l'invention et d'au moins un aldéhyde.

De préférence, durant l'étape de mélangeage, on mélange également au moins un élastomère à la composition.

L'invention peut également permettre de mettre en oeuvre un procédé de fabrication d'une composition de caoutchouc à l'état cuit, comprenant :
- une étape de fabrication d'une composition de caoutchouc à l'état cru comprenant une étape de mélangeage d'au moins un dérivé de polyphénol aromatique selon l'invention et d'au moins un aldéhyde,
- puis, une étape de mise en forme de la composition de caoutchouc à l'état cru,
- puis, une étape de vulcanisation de la composition de caoutchouc durant laquelle on réticule une résine phénol-aldéhyde à base du dérivé de polyphénol aromatique selon l'invention et de l'aldéhyde.

Alternativement, l'étape de réticulation par vulcanisation ou cuisson peut être remplacée par une étape de réticulation utilisant un autre système de réticulation que le soufre.

Comme expliqué précédemment, les inventeurs émettent l'hypothèse selon laquelle durant l'étape de réticulation, par exemple par vulcanisation ou cuisson, on réalise, préalablement à la réticulation de la résine phénol-aldéhyde:
- une étape de formation d'un polyphénol aromatique à partir du dérivé de polyphénol aromatique selon l'invention par formation, sur le noyau aromatique, d'au moins deux fonctions hydroxyles en position méta l'une par rapport à l'autre, les deux positions ortho d'au moins une des fonctions hydroxyles étant non substituées, chaque fonction hydroxyle étant obtenue à partir de chaque groupe -O-Z, et
- une étape de réticulation de la résine phénol-aldéhyde à partir du polyphénol aromatique et de l'aldéhyde.

Ainsi, l'utilisation du dérivé de polyphénol aromatique selon l'invention permet également d'obtenir des compositions de caoutchouc présentant une rigidité à basse déformation largement améliorée par rapport aux compositions de caoutchouc classiques.

Par composition de caoutchouc, on entend que la composition comprend au moins un élastomère ou un caoutchouc (les deux termes étant synonymes) et au moins un autre composant. Une composition de caoutchouc comprend donc une matrice d'élastomère ou de caoutchouc dans laquelle est dispersée au moins l'autre composant. Une composition de caoutchouc est dans un état plastique à l'état cru (non-réticulé) et dans un état élastique à l'état cuit (réticulé) mais en aucun cas dans un état liquide. Une composition de caoutchouc ne doit pas être confondue avec un latex d'élastomère qui est une composition dans un état liquide comprenant un solvant liquide, généralement de l'eau, et au moins un élastomère ou un caoutchouc dispersé dans le solvant liquide de façon à former une émulsion. Ainsi, la composition de caoutchouc n'est pas une composition adhésive aqueuse.

La composition de caoutchouc comprend donc au moins une (c'est-à-dire une ou plusieurs) résine phénol-aldéhyde; cette résine phénol-aldéhyde étant à base d'au moins un (c'est-à-dire un ou plusieurs) aldéhyde et au moins un (c'est-à-dire un ou plusieurs) dérivé de polyphénol aromatique selon l'invention, constituants qui vont être décrits en détail ci-après.

Dans la présente description, sauf indication expresse différente, tous les pourcentages (%) indiqués sont des pourcentages en poids. Le sigle « pce » signifie parties en poids pour cent parties d'élastomère.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

### Utilisation du dérivé de polyphénol aromatique selon l'invention

Le dérivé de polyphénol aromatique selon l'invention comprend au moins un noyau aromatique porteur d'au moins deux groupes -O-Z en position méta l'un par rapport à l'autre, les deux positions ortho d'au moins un de ces groupes -O-Z étant non substituées.

Dans un mode de réalisation de l'invention, le dérivé de polyphénol aromatique est utilisé pour générer une phase retard lors de la réticulation d'une résine phénol-aldéhyde à base du dérivé de polyphénol aromatique et d'un aldéhyde, par exemple tel que décrit ci-dessous.

Dans un autre mode de réalisation, le dérivé de polyphénol aromatique est utilisé dans une résine phénol-aldéhyde pour maintenir la rigidité d'une composition de caoutchouc avec l'augmentation de la température.

Conformément à l'invention, le dérivé de polyphénol aromatique peut être, dans un mode de réalisation, une molécule simple de dérivé de polyphénol aromatique comprenant un ou plusieurs noyaux aromatiques, au moins un de ces noyaux aromatiques, voire chaque noyau aromatique, étant porteur d'au moins deux groupes -O-Z en position méta l'un par rapport à l'autre, les deux positions ortho d'au moins un de ces groupes -O-Z étant non substituées.

De telles molécules simples ne comprennent pas de motif répétitif.

Conformément à l'invention, le dérivé de polyphénol aromatique peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé comprenant au moins une fonction aldéhyde,
les fonctions hydroxyles de la résine pré-condensée libres à l'issue de la condensation de la résine pré-condensée étant substituées par des groupes -O-Z.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux groupes -O-Z en position méta l'un par rapport à l'autre, les deux positions ortho d'au moins un de ces groupes -O-Z étant non substituées. Dans ce mode de réalisation, afin de former le dérivé de polyphénol aromatique sous forme de résine pré-condensée, on forme la résine pré-condensée à base d'un polyphénol aromatique comprenant au moins un noyau aromatique porteur d'au moins deux fonctions hydroxyles - OH en position méta l'une par rapport à l'autre, les deux positions ortho d'au moins une des fonctions hydroxyles -OH étant non substituées, et on fait réagir cette résine pré-condensée avec un composé permettant de former le groupe -O-Z à partir de chaque fonction hydroxyle restées libres à l'issue de la condensation de la résine pré-condensée.

Dans un autre mode de réalisation, le dérivé de polyphénol aromatique est un mélange d'un dérivé d'un polyphénol aromatique formant une molécule simple et d'une résine pré-condensée à base de polyphénol aromatique dans laquelle les fonctions hydroxyles de la résine pré-condensée libres à l'issue de la condensation de la résine pré-condensée sont substituées par des groupes -O-Z.

Dans les modes de réalisation particuliers qui suivent, on décrit le ou les noyaux aromatiques du dérivé de polyphénol aromatique. Par souci de clarté, on y décrit le « dérivé du polyphénol aromatique » sous sa forme de molécule simple. Le polyphénol aromatique à l'origine des dérivés correspondants pourront ensuite être condensés et définiront en partie le motif répétitif. Les caractéristiques de la résine pré-condensée sont décrites plus en détail par la suite.

Avantageusement, chaque groupe R₁, R₂, R₃ représente, indépendamment l'un de l'autre, un radical choisi dans le groupe constitué par les radicaux alkyle, aryle, arylalkyle, alkylaryle, cycloalkyle, alcényle.

Préférentiellement, chaque groupe R₁, R₂, R₃ représente, indépendamment l'un de l'autre, un radical choisi dans le groupe constitué par les radicaux méthyle, éthyle, propyle, phényle, allyle, vinyle.

Encore plus préférentiellement, chaque groupe R₁, R₂, R₃ représente, indépendamment l'un de l'autre, un radical choisi dans le groupe constitué par les radicaux méthyle, éthyle, propyle, butyle, allyle, vinyle.

Dans les modes de réalisation qui précèdent, les radicaux propyle comprennent les radicaux de formule -C₃H₇. Ces radicaux sont le n-propyl et l'isopropyl.

Dans les modes de réalisation qui précèdent, les radicaux butyle comprennent les radicaux de formule -C₄H₉. Ces radicaux sont le n-butyl, isobutyl, le sec-butyl et le tert-butyl.

Dans les modes de réalisation qui précèdent, les radicaux aryle comprennent les noyaux aromatiques dont on a éliminé un atome d'hydrogène. Par exemple, le radical aryle est le radical C₆H₅ obtenu à partir du benzène C₆H₆. Un autre exemple de radical aryle est le radical C₄H₃O obtenu à partir du furane C₄H₄O.

Dans un mode de réalisation préféré, le noyau aromatique est porteur de trois groupes -O-Z en position méta les uns par rapport aux autres.

De préférence, les deux positions ortho de chaque groupe -O-Z sont non substituées. On entend par là que les deux atomes de carbone situés de part et d'autre (en position ortho) de l'atome de carbone porteur du groupe -O-Z sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des groupes -O-Z) sont porteurs d'un simple atome d'hydrogène.

Dans un mode de réalisation, le dérivé de polyphénol aromatique comprend plusieurs noyaux aromatiques, au moins deux d'entre eux étant chacun porteur d'au moins deux groupes -O-Z en position méta l'un par rapport à l'autre, les deux positions ortho d'au moins un des groupes -O-Z d'au moins un noyau aromatique étant non substituées.

Dans un mode de réalisation préféré, au moins un des noyaux aromatiques est porteur de trois groupes -O-Z en position méta les uns par rapport aux autres.

De préférence, les deux positions ortho de chaque groupe -O-Z d'au moins un noyau aromatique sont non substituées.

Encore plus préférentiellement, les deux positions ortho de chaque groupe -O-Z de chaque noyau aromatique sont non substituées.

Avantageusement, le ou chaque noyau aromatique est un noyau benzénique.

A titre d'exemple de dérivés de polyphénol aromatique selon l'invention comportant un seul noyau aromatique, on peut citer en particulier, des dérivés du résorcinol et du phloroglucinol, de formules développées :

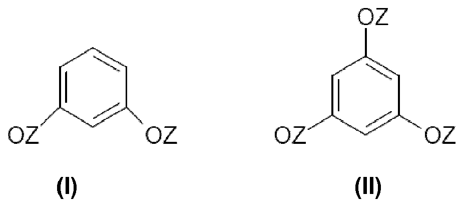

A titres d'exemples, dans le cas où le dérivé de polyphénol aromatique selon l'invention comporte plusieurs noyaux aromatiques, au moins deux de ces noyaux aromatiques, identiques ou différents, sont choisis parmi ceux de formules générales : 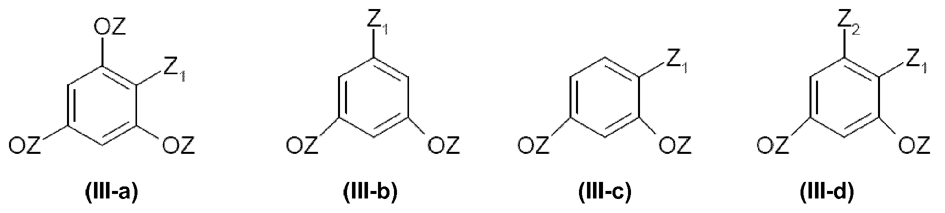 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du dérivé de polyphénol aromatique .

Un autre exemple de dérivé de polyphénol aromatique selon l'invention est un dérivé du 2,2',4,4'-tétrahydroxydiphényl sulfide, dérivé ayant la formule développée suivante :

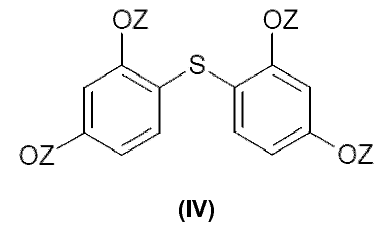

Un autre exemple de dérivé de polyphénol aromatique selon l'invention est un dérivé de la 2,2',4,4'-tétrahydroxydiphényl benzophénone, dérivé de formule développée suivante :

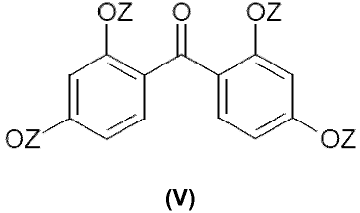

On note que chaque dérivé de polyphénol aromatique **IV** et **V** est un dérivé de polyphénol aromatique selon l'invention comportant deux noyaux aromatiques (de formules **III-c**) dont chacun est porteur d'au moins deux (en l'occurrence de deux) groupes -O-Z en position méta l'un par rapport à l'autre.

On note que dans le cas d'un dérivé de polyphénol aromatique selon l'invention comportant au moins un noyau aromatique conforme à la formule **III-b**, les deux positions ortho de chaque groupe -O-Z d'au moins un noyau aromatique sont non substituées. Dans le cas d'un dérivé de polyphénol aromatique selon l'invention comportant plusieurs noyaux aromatiques conformes à la formule **III-b**, les deux positions ortho de chaque groupe -O-Z de chaque noyau aromatique sont non substituées.

Selon un mode de réalisation de l'invention, le dérivé de polyphénol aromatique selon l'invention est choisi dans le groupe constitué par les dérivés de polyphénol aromatique de formule (**I**), (**II)**, (**IV**) et (**V**) décrits ci-dessus ainsi que les mélanges de ces dérivés de polyphénol aromatique. Dans un mode de réalisation particulièrement avantageux, le dérivé de polyphénol aromatique selon l'invention est le dérivé de polyphénol aromatique (**II**).

Dans un mode de réalisation, le dérivé de polyphénol aromatique comprend une résine pré-condensée à base d'au moins un polyphénol aromatique tel que décrit dans l'un quelconque des modes de réalisations décrits dans la présente demande, les fonctions hydroxyles de la résine pré-condensée libres à l'issue de la condensation de la résine pré-condensée étant substituées par des groupes -O-Z.

Cette résine pré-condensée est avantageusement à base :
- d'au moins un polyphénol aromatique tel que défini précédemment, et préférentiellement choisi dans le groupe constitué par le résorcinol, le phloroglucinol, le 2,2',4,4'-tétrahydroxydiphényl sulfide, la 2,2',4,4'-tétrahydroxybenzophenone, et leurs mélanges ; et
- d'au moins un composé comprenant au moins une fonction aldéhyde.

Le composé comprenant au moins une fonction aldéhyde et réagissant avec ledit polyphénol aromatique peut être un aldéhyde tel que défini ci-après. Avantageusement, ledit composé comprenant au moins une fonction aldéhyde est choisi dans le groupe constitué par le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés.

Ainsi, dans la résine pré-condensée à base de polyphénol aromatique, le motif répétitif comprend au moins un noyau aromatique porteur d'au moins deux fonctions hydroxyle en position méta l'une par rapport à l'autre, au moins un des atomes de carbone du noyau aromatique, qui était non substitué avant la condensation de la résine pré-condensée, étant relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un aldéhyde conforme à l'invention dans une étape ultérieure.

Le dérivé de polyphénol aromatique peut également comprendre un mélange d'une molécule libre de dérivé de polyphénol aromatique et d'une résine pré-condensée à base de polyphénol aromatique, les fonctions hydroxyles de la résine pré-condensée libres à l'issue de la condensation de la résine pré-condensée étant substituées par des groupes -O-Z. En particulier, le dérivé de polyphénol aromatique peut également comprendre un mélange de dérivé du phloroglucinol et d'une résine pré-condensée à base de phloroglucinol, les fonctions hydroxyles de la résine pré-condensée libres à l'issue de la condensation de la résine pré-condensée étant substituées par des groupes -O-Z.

Les définitions du groupe -O-Z qui suivent s'appliquent aussi bien au dérivé de polyphénol aromatique sous sa forme de molécule simple ou de résine pré-condensée.

### Composition de caoutchouc

En fonction de l'utilisation de la composition, on utilisera une quantité d'aldéhyde allant de 0,1 à 25 pce. De même, on utilisera une quantité de dérivé de polyphénol aromatique selon l'invention allant de 0,1 à 25 pce.

Dans certains modes de réalisation, le ratio molaire [aldéhyde] : [dérivé de polyphénol aromatique] varie avantageusement de 3 :1 à 1 :1, avantageusement de 3 :1 à 1,5 :1.

Selon l'utilisation que l'on fait de la composition, la composition de caoutchouc présente, à l'état cuit, un module sécant à 10% d'allongement MA10 mesuré selon la norme ASTM D 412 de 1998 (éprouvette C) supérieur ou égal à 10 MPa, de préférence à 20 MPa, préférentiellement à 30 MPa, plus préférentiellement à 40 MPa et encore plus préférentiellement à 60 MPa.

De préférence, la composition de caoutchouc comprend un élastomère diénique.

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les compositions de caoutchouc peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition de caoutchouc comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante telle que silice) est compris dans un domaine de 5 à 120 pce, plus préférentiellement de 5 à 100 pce et encore plus préférentiellement de 5 à 90 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition de caoutchouc, seule ou en coupage avec du noir de carbone, son taux est compris dans un domaine de 0 à 70 pce, préférentiellement de 0 à 50 pce, en particulier également de 5 à 70 pce, et encore plus préférentiellement cette proportion varie de 5 à 50 pce, particulièrement de 5 à 40 pce.

De préférence, la composition de caoutchouc comprend des additifs divers.

Les compositions de caoutchouc peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue ou bien encore des promoteurs d'adhésion.

De préférence, la composition de caoutchouc comprend un système de réticulation, plus préférentiellement de vulcanisation.

Le système de vulcanisation, comprend un agent donneur de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur de vulcanisation et/ou un retardateur de vulcanisation.

Le soufre ou agent donneur de soufre est utilisé à un taux préférentiel compris dans un domaine de 0,5 à 10 pce, plus préférentiellement compris dans un domaine de 0,5 à 8,0 pce. L'ensemble des accélérateurs, retardateurs et activateurs de vulcanisation est utilisé à un taux préférentiel compris dans un domaine de 0,5 à 15 pce. Le ou les activateurs de vulcanisation est ou sont utilisés à un taux préférentiel compris dans un domaine de 0,5 et 12 pce.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, divers accélérateurs secondaires ou activateurs de vulcanisation connus tels qu'oxyde de zinc, acide stéarique, dérivés guanidiques (en particulier diphenylguanidine), etc.

On peut utiliser comme accélérateur (primaire ou secondaire) tout composé susceptible d'agir comme accélérateur de vulcanisation des élastomères diéniques en présence de soufre, notamment des accélérateurs du type thiazole ainsi que leurs dérivés, des accélérateurs de type thiurame, et de type dithiocarbamate de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl- 2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Dans un mode de réalisation, la composition de caoutchouc se trouve à l'état cuit, c'est-à-dire vulcanisée. Dans d'autres modes de réalisation, la composition se trouve à l'état cru, c'est-à-dire non vulcanisée, la résine phénol-aldéhyde réticulée ayant été ajoutée ultérieurement à la composition non vulcanisée.

Dans certains modes de réalisation, la composition comprend un résidu obtenu à partir du radical -Z de chaque groupe -O-Z. Préalablement à la réticulation de la résine, et comme supposé par les inventeurs à l'origine de l'invention, après formation de chaque fonction hydroxyle -OH, chaque radical Z de chaque groupe -O-Z peut permettre d'obtenir un résidu généré in-situ. Certains résidus restent définitivement dans la composition et, le cas échéant, peuvent être utilisés pour certaines de leurs propriétés.

Dans d'autres modes de réalisation, le résidu généré ne reste que temporairement dans la composition soit parce qu'il en sort spontanément dans les conditions de fabrication de la composition, par exemple sous la forme de gaz, notamment dans le cas où le résidu est volatil, soit parce qu'on met en oeuvre une étape optionnelle d'extraction de ce résidu dans le procédé de fabrication de la composition.

Dans un mode de réalisation, la résine phénol-aldéhyde n'ayant pas encore réticulé, la composition de caoutchouc comprend au moins un dérivé de polyphénol aromatique selon l'invention et au moins un aldéhyde.

De préférence, dans ce mode de réalisation, la composition est à l'état cru, c'est-à-dire non vulcanisée.

De préférence, la composition de caoutchouc peut être utilisée dans le pneumatique sous la forme d'une couche. Par couche, on entend tout élément tridimensionnel, de forme et d'épaisseur quelconques, notamment en feuille, bande ou autre élément de section droite quelconque, par exemple rectangulaire ou triangulaire.

### Aldéhyde à la base de résine phénol-aldéhyde

La composition comprend un ou plusieurs aldéhyde(s).

Avantageusement, le ou au moins un aldéhyde est un aldéhyde aromatique.

Un tel aldéhyde est très avantageux. En effet, les Demanderesses ont découvert lors de leurs recherches que l'aldéhyde aromatique permet d'éviter la production de formaldéhyde contrairement aux donneurs de méthylène classiques. En effet, la combinaison de résine phénolique classiquement utilisée en tant qu'accepteur de méthylene avec l'HMT ou l'H3M en tant que donneur de méthylène dans l'état de la technique, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental de ces composés et de l'évolution récente de la réglementation, notamment la réglementation européenne, sur ce type de composé.

En outre, un tel aldéhyde aromatique est très stable, ce qui limite les risques de dégradation, notamment par oxydation.

Un aldéhyde aromatique est un composé comprenant au moins un noyau aromatique, ce noyau aromatique portant au moins une (une ou plusieurs) fonction aldéhyde.

De préférence, l'aldéhyde aromatique est choisi dans le groupe constitué par le 1,3-benzène-dicarboxaldéhyde, le 1,4-benzène-dicarboxaldéhyde, un aldéhyde de formule (A) : 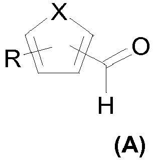 dans laquelle :
X comprend N, S ou O
R représente -H ou -CHO
et les mélanges de ces composés.

Préférentiellement, l'aldéhyde est de formule générale (A'):

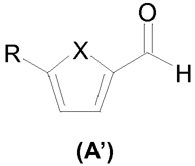

Encore plus préférentiellement, R représente -CHO.

Selon un mode de réalisation préférentiel, X représente O.

Dans une variante de l'aldéhyde de formule générale **(A)**, X représente O et R représente -H. L'aldéhyde utilisé est alors de formule **(Ba)**:

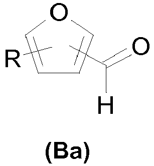

Dans une variante de l'aldéhyde de formule générale **(A'),** X représente O et R représente -H. L'aldéhyde utilisé est alors le furfuraldéhyde et est de formule **(B'a)**:

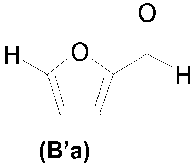

Dans une autre variante de l'aldéhyde de formule générale **(A)**, X représente O et R représente -CHO. L'aldéhyde utilisé est alors de formule **(Bb)**:

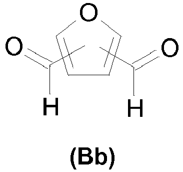

Dans une autre variante de l'aldéhyde de formule générale **(A')**, X représente O et R représente -CHO. L'aldéhyde utilisé est alors le 2,5-furanedicarboxaldéhyde et est de formule **(B'b):**

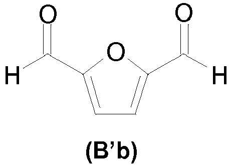

Dans un autre mode de réalisation, X comprend N.

Dans une variante de l'aldéhyde de formule générale **(A)**, X représente NH. L'aldéhyde utilisé est de formule **(Ca)**:

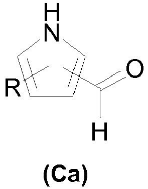

Dans une variante de l'aldéhyde de formule générale **(A')**, X représente NH. L'aldéhyde utilisé est de formule **(C'a)**:

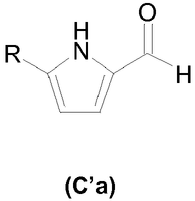

De préférence, R représente -CHO dans la variante de l'aldéhyde de formule **(C'a)** et l'aldéhyde obtenu est alors le 2,5-1H-pyrroledicarboxaldéhyde.

Dans une autre variante de l'aldéhyde de formule générale **(A)**, X représente NR1' avec R1' représentant un radical choisi dans le groupe constitué par les radicaux alkyle, aryle arylalkyle, alkylaryle, cycloalkyle. L'aldéhyde utilisé est de formule **(Cb)**:

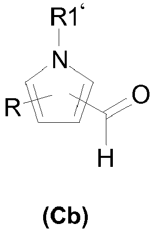

Dans un autre mode de réalisation, X comprend S.

Dans une variante de l'aldéhyde de formule générale **(A)**, X représente S. L'aldéhyde utilisé est de formule **(Da):**

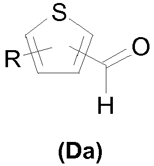

Dans une variante de l'aldéhyde de formule générale **(A')**, X représente S. L'aldéhyde utilisé est de formule **(D'a)**:

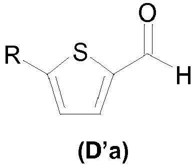

De préférence, R représente -CHO dans la variante de l'aldéhyde de formule **(IV'a)** et est alors le 2,5-thiophènedicarboxaldéhyde.

Dans une autre variante de l'aldéhyde de formule générale **(A)**, X représente SR2' avec R2' représentant un radical choisi dans le groupe constitué par les radicaux alkyle, aryle arylalkyle, alkylaryle, cycloalkyle. L'aldéhyde utilisé est de formule **(Db)**:

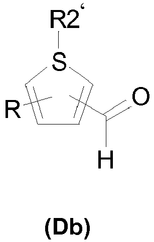

Dans encore une autre variante de l'aldéhyde de formule générale **(A)**, X représente R3'-S-R2' avec R2', R3' représentant chacun indépendamment l'un de l'autre un radical choisi dans le groupe constitué par les radicaux alkyle, aryle arylalkyle, alkylaryle, cycloalkyle. L'aldéhyde utilisé est de formule **(Dc)**:

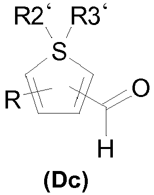

Dans encore une autre variante de l'aldéhyde de formule générale **(A)**, X représente S=O. L'aldéhyde utilisé est de formule **(Dd)**:

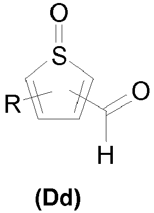

Dans encore une autre variante de l'aldéhyde de formule générale **(A)**, X représente O=S=O. L'aldéhyde utilisé est de formule **(De)**:

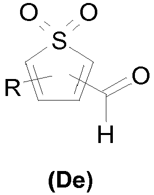

Parmi les différents modes de réalisation décrits ci-dessus, on préférera les modes de réalisation et les variantes dans lesquels X représente NH, S ou O. Dans ces modes de réalisation et variantes, on pourra avoir, R représentant -H ou -CHO et de préférence R représentant -CHO. Dans ces modes de réalisation et variantes, on aura préférentiellement R en position 5 et le groupe -CHO en position 2 sur le noyau aromatique (formule générale **(A**'**)**).

Ainsi, plus préférentiellement, l'aldéhyde aromatique est choisi dans le groupe constitué par le 1,4-benzène-dicarboxaldéhyde, le furfuraldéhyde, le 2,5-furanedicarboxaldéhyde et les mélanges de ces composés.

De préférence, la composition est dépourvue de formaldéhyde.

Lorsque la résine phénol-aldéhyde est à base de plusieurs aldéhydes dont l'un au moins est un aldéhyde aromatique tel que décrit ci-dessus, chaque aldéhyde autre que chaque aldéhyde aromatique tel que décrit ci-dessus est préférentiellement différent du formaldéhyde. La composition est alors également préférentiellement dépourvue de formaldéhyde.

En d'autres termes et de manière préférée, le ou chaque aldéhyde de la résine phénol-aldéhyde est différent du formaldéhyde.

Par dépourvue de formaldéhyde, on entend que le taux massique de formaldéhyde en poids total du ou des aldéhydes est strictement inférieur à 1%.

Dans certains modes de réalisation, la composition peut comprendre du formaldéhyde. De préférence, la composition comprend alors un taux massique de formaldéhyde en poids total du ou des aldéhydes inférieur ou égal à 10%, de préférence à 5% et plus préférentiellement à 2%.

### Composite de caoutchouc

Le composite de caoutchouc est renforcé d'au moins un élément de renfort noyé dans la composition de caoutchouc comprenant une résine phénol-aldéhyde à base d'un dérivé de polyphénol aromatique selon l'invention.

Ce composite de caoutchouc peut être préparé selon un procédé comportant au moins les étapes suivantes :
- au cours d'une première étape, combiner au moins un élément de renfort avec une composition de caoutchouc (ou élastomère, les deux termes sont synonymes) pour former un composite de caoutchouc renforcé de l'élément de renfort;
- puis, au cours d'une deuxième étape, réticuler par cuisson, par exemple par vulcanisation, de préférence sous pression, le composite ainsi formé.

Parmi les éléments de renforts, on pourra citer les éléments de renfort textiles, métalliques ou hybrides textile-métal.

Par textile, on entend, de manière bien connue de l'homme du métier, tout matériau en matière autre que métallique, qu'elle soit naturelle comme synthétique, susceptible d'être transformée en fil, fibre par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou fibre ou également en un tissu réalisé à partir de fils ou fibres, par exemple d'un tissu tramé avec fils de chaîne et fils de trame, ou encore d'un tissu croisé avec fils croisés.

De préférence, ce matériau textile de l'invention est choisi dans le groupe constitué par les monofilaments (ou fils unitaires), les fibres multifilamentaires, les assemblages de tels fils ou fibres, et les mélanges de tels matériaux. Il s'agit plus particulièrement d'un monofilament, d'une fibre multifilamentaire ou d'un retors.

Par fil ou fibre, on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm.

Ce fil ou cette fibre peut prendre tout forme connue, il peut s'agir par exemple d'un monofilament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Les matériaux textiles peuvent être en matière organique ou polymérique, comme en matière inorganique.

A titre d'exemples de matières inorganiques, on citera le verre, le carbone.

L'invention est préférentiellement mise en oeuvre avec des matériaux en matière polymérique, du type thermoplastique comme non thermoplastique.

A titre d'exemples de matières polymériques du type non thermoplastique, on citera par exemple l'aramide (polyamide aromatique) et la cellulose, naturelle comme artificielle, telle que le coton, la rayonne, le lin, le chanvre.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Par métallique, on entend par définition un ou des éléments filaires constitués majoritairement (c'est-à-dire pour plus de 50% de sa masse) ou intégralement (pour 100% de sa masse) d'un matériau métallique. De préférence, le matériau métallique est l'acier, plus préférentiellement en acier perlitique (ou ferrito-perlitique) au carbone comprenant avantageusement entre 0,4% et 1,2% en masse de carbone.

L'élément de renfort métallique peut être un monofilament, un câble comprenant plusieurs monofilaments métalliques ou un câble multi-torons comprenant plusieurs câbles alors appelés torons.

Dans le cas préféré où l'élément de renfort comprend plusieurs monofilaments métalliques ou plusieurs torons, les monofilaments métalliques ou les torons sont assemblés par retordage ou par câblage. On rappelle qu'il existe deux techniques possibles d'assemblage:
- soit par retordage : les monofilaments métalliques ou les torons subissent à la fois une torsion collective et une torsion individuelle autour de leur propre axe, ce qui génère un couple de détorsion sur chacun des monofilaments ou torons ;
- soit par câblage: les monofilaments métalliques ou les torons ne subissent qu'une torsion collective et ne subissent pas de torsion individuelle autour de leur propre axe.

De façon optionnelle, l'élément de renfort comprend plusieurs monofilaments et est du type gommé in situ, c'est-à-dire que l'élément de renfort est gommé de l'intérieur, pendant sa fabrication même par une gomme de remplissage. De tels éléments filaires métalliques sont connus de l'homme du métier. La composition de la gomme de remplissage peut être identique ou non à la composition de caoutchouc dans laquelle l'élément de renfort est noyé.

### Pneumatique

De tels pneumatiques sont par exemple ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

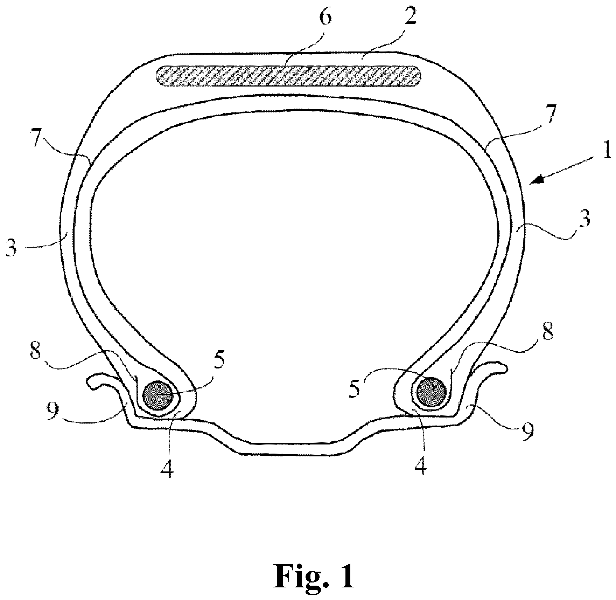

A titre d'exemple, la figure 1 annexée représente de manière très schématique (sans respect d'une échelle spécifique), une coupe radiale d'un pneumatique conforme à l'invention pour véhicule du type poids lourd.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique qu'au moins une armature de sommet 6 et/ou son armature de carcasse 7 comporte une composition de caoutchouc comprenant une résine phénol-aldéhyde à base d'un dérivé de polyphénol aromatique selon l'invention.

### Procédé de fabrication du dérivé de polyphénol aromatique

Le dérivé de polyphénol aromatique tel que défini ci-dessus est fabriqué au moyen d'un procédé dans lequel on fait réagir :
- un polyphénol aromatique comprenant au moins un noyau aromatique porteur d'au moins deux fonctions hydroxyles -OH en position méta l'une par rapport à l'autre, les deux positions ortho d'au moins une des fonctions hydroxyles -OH étant non substituées, et
- un composé de formule LG-Si(R₁R₂R₃) avec R₁, R₂, R₃ représentant, indépendamment l'un de l'autre, un radical hydrocarboné ou un radical hydrocarboné substitué et LG représentant un groupe nucléofuge.

Les conditions de la réaction entre le polyphénol aromatique et le composé de formule LG-Si(R₁R₂R₃) sont bien connues de l'homme du métier. Ainsi par exemple, on met en oeuvre le procédé selon l'invention en faisant réagir tout d'abord, dans un solvant organique, le polyphénol aromatique avec une base, plus préférentiellement une base organique, puis en introduisant le composé de formule LG-Si(R₁R₂R₃) dans le mélange réactionnel. En fonction des groupes R₁, R₂, et R₃ et du polyphénol aromatique, la réaction est conduite entre 20°C et 50°C pendant quelques heures, par exemple entre 1 heure et 10 heures.

Dans un mode de réalisation du procédé selon l'invention précédemment décrit, le groupe nucléofuge LG représente un halogène. On rappelle que les halogènes correspondent aux éléments F, Cl, Br et I.

Plus préférentiellement, LG représente le chlore.

### Procédé de fabrication de la composition de caoutchouc

Le procédé de fabrication décrit précédemment et ci-après permet de fabriquer la composition de caoutchouc comprenant une résine phénol-aldéhyde à base d'un dérivé de polyphénol aromatique selon l'invention.

La composition de caoutchouc peut être fabriquée dans des mélangeurs appropriés, en utilisant deux phases de préparation successives bien connues de l'homme du métier :
- une première phase de travail ou malaxage thermomécanique (phase dite "non-productive") à haute température, jusqu'à une température maximale comprise entre 110°C et 190°C, de préférence entre 130°C et 180°C,
- suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Dans un premier mode de réalisation, le procédé comporte les étapes suivantes :
- incorporer à un élastomère, au cours d'une première étape, une charge renforçante, en malaxant thermomécaniquement le tout, jusqu'à atteindre une température maximale comprise entre 110°C et 190°C ;
- refroidir l'ensemble à une température inférieure à 110°C ;
- incorporer ensuite, au cours d'une seconde étape, un système de réticulation, le dérivé de polyphénol aromatique selon l'invention et l'aldéhyde ;
- malaxer le tout à une température inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante,...), puis dans un deuxième temps, par exemple après une à deux minutes de malaxage, les autres additifs, éventuels agents de recouvrement de la charge ou de mise en oeuvre complémentaires, à l'exception du système de réticulation, du dérivé de polyphénol aromatique selon l'invention et de l'aldéhyde. La durée totale du malaxage, dans cette phase non-productive, est de préférence comprise entre 1 et 15 min.

Apres refroidissement du mélange ainsi obtenu, on incorpore alors dans un mélangeur externe tel qu'un mélangeur à cylindres, maintenu à basse température (par exemple entre 40°C et 100°C), le système de réticulation, l'aldéhyde et le dérivé de polyphénol aromatique selon l'invention. L'ensemble est alors mélangé (phase productive) pendant quelques minutes, par exemple entre 2 et 15 min.

La composition ainsi obtenue à l'état cru peut ensuite être mise en forme, par exemple calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

Puis, après une éventuelle étape d'assemblage entre elles de plusieurs compositions mises en forme de nappes ou de bandes sous la forme d'un composite ou d'une ébauche crue de pneumatique, on procède à une étape de vulcanisation de la composition, du composite ou de l'ébauche durant laquelle on réticule la résine phénol-aldéhyde à base du dérivé de polyphénol aromatique selon l'invention et de l'aldéhyde. On réalise l'étape de vulcanisation à une température supérieure ou égale à 120°C, de préférence supérieure ou égale à 140°C. On obtient la composition à l'état cuit.

Dans un deuxième mode de réalisation, le procédé comporte les étapes suivantes :
- incorporer à un élastomère, au cours d'une première étape, une charge renforçante, le dérivé du polyphénol aromatique et l'aldéhyde, en malaxant thermomécaniquement le tout, jusqu'à atteindre une température maximale comprise entre 110°C et 190°C ;
- refroidir l'ensemble à une température inférieure à 110°C ;
- incorporer ensuite, au cours d'une seconde étape, un système de réticulation;
- malaxer le tout à une température inférieure à 110°C.

L'invention ainsi que ses avantages seront aisément compris à la lumière des exemples de réalisation qui suivent.

### Exemples de réalisation de l'invention et essais comparatifs

Ces essais démontrent que :
- la rigidité de la composition de caoutchouc comprenant une résine phénol-aldéhyde à base d'un dérivé de polyphénol aromatique selon l'invention est largement augmentée par rapport à une composition de caoutchouc dépourvue de résine renforçante ;
- la rigidité de la composition de caoutchouc comprenant une résine phénol-aldéhyde à base d'un dérivé de polyphénol aromatique selon l'invention peut être améliorée par rapport à une composition de caoutchouc utilisant une résine renforçante classique à base d'un accepteur de méthylene avec l'HMT ou l'H3M en tant que donneur de méthylène ;
- le maintien de la rigidité de la composition de caoutchouc selon l'invention aux températures élevées, en particulier pour des températures allant jusqu'à 150°C, est supérieur à celui des compositions de caoutchouc dépourvues de résine renforçante et équivalent, voire supérieur dans certains modes de réalisation, à celui des compositions de caoutchouc classiques qui comprennent des donneurs de méthylène HMT ou H3M ;
- il existe une phase retard lors de la réticulation de la résine phénol-aldéhyde à base d'un dérivé de polyphénol aromatique selon l'invention permettant d'éviter la réticulation précoce de la résine par rapport à une résine phénol-aldéhyde réticulée directement à partir du polyphénol aromatique et de l'aldéhyde;
- la résine phénol-aldéhyde à base d'un dérivé de polyphénol aromatique selon l'invention et d'un aldéhyde préférentiellement aromatique est dépourvue de formaldéhyde et n'en génère pas lors de sa formation.

Pour cela, plusieurs compositions de caoutchouc, notées ci-après T0, T1 et T2 et I1 à I3 ont été préparées comme indiqué précédemment et sont rassemblées dans le tableau 1 annexé ci-après.

Toutes les compositions T0 à T2 et I1 à I3 ont une partie commune dans leurs formulations (exprimées en pce, parties en poids pour cent parties d'élastomère): 100 pce de caoutchouc naturel, 75 pce de noir de carbone N326, 1,5 pce de N-1, 3-diméthylbutyl-N-phényl-para-phénylènediamine, 1,5 pce d'acide stéarique, 5 pce de ZnO, 1 pce de N-tertiarybutyl-2-benzothiazole sulfamide et 2,5 pce de soufre insoluble 20H.

La composition T0 ne comprend aucune résine renforçante ajoutée à cette partie commune.

En plus de la partie commune, la composition T1 comprend une résine renforçante à base d'hexa-méthylènetétramine (1,6 pce) et d'une résine phénolique pré-condensée (4 pce). La composition T1 représente une composition classique de l'état de la technique présentant une rigidité supérieure à celle de la composition T0.

En plus de la partie commune, la composition T2 comprend une résine phénol-aldéhyde à base de phloroglucinol et de 1,4-benzène-dicarboxaldéhyde. La composition T2 comprend 7 pce de phloroglucinol et 14 pce de 1,4-benzène-dicarboxaldéhyde.

En plus de la partie commune, chaque composition I1 à I3 comprend une résine phénol-aldéhyde à base d'un dérivé de polyphénol aromatique selon l'invention et d'un aldéhyde, de préférence un aldéhyde aromatique, indiqués dans le tableau 1 dans des proportions molaires 1 (dérivé de polyphénol aromatique selon l'invention) / 2 (aldéhyde), et avec dans chaque composition I1 à I3 14 pce de l'aldéhyde.

Chaque dérivé de polyphénol aromatique selon l'invention dans chaque composition I1 à I3 comprend au moins un noyau aromatique porteur d'au moins deux groupes -O-Z en position méta l'une par rapport à l'autre, les deux positions ortho d'au moins un des groupes -O-Z étant non substituées et dans lequel chaque groupe -O-Z représente un groupe -O-Si(R₁R₂R₃) avec R₁, R₂, R₃ représentant, indépendamment l'un de l'autre, un radical hydrocarboné ou un radical hydrocarboné substitué.

Dérivés de polyphénol aromatique des compositions 11 à 13

Chaque dérivé de polyphénol aromatique selon l'invention de la résine de chaque composition I1 à I3 est choisi dans le groupe constitué par les dérivés de polyphénol aromatique de formule **(I)**, **(II)**, **(IV)** et **(V)** décrits ci-dessus et les mélanges de ces dérivés de polyphénol aromatique.

Chaque dérivé de polyphénol aromatique selon l'invention de chaque composition I1 à I3 comprend un unique noyau aromatique, ici benzénique, porteur de trois, et seulement trois, groupes -O-Z en position méta l'un par rapport à l'autre.

Pour les dérivés de polyphénol aromatique selon l'invention de chaque composition I1 à 13, le reste du noyau aromatique est non substitué. En particulier, les deux positions ortho de chaque groupe -O-Z sont non substituées. En l'espèce, il s'agit de dérivés de polyphénol aromatique de formule générale **(II)** obtenus à partir du phloroglucinol.

Chaque dérivé de polyphénol aromatique selon l'invention de chaque composition I1 à I3 présente des groupes -O-Z représentant chacun un groupe -O-Si(R₁R₂R₃) avec R₁, R₂, R₃ représentant, indépendamment l'un de l'autre, un radical choisi dans le groupe constitué par les radicaux alkyle, aryle, arylalkyle, alkylaryle, cycloalkyle, alcényle. De préférence, chaque groupe R₁, R₂, R₃ représente, indépendamment l'un de l'autre, un radical choisi dans le groupe constitué par les radicaux méthyle, éthyle, propyle, phényle, allyle, vinyle et encore plus préférentiellement un radical choisi dans le groupe constitué par les radicaux méthyle, éthyle, propyle, butyle, allyle, vinyle.

Le dérivé de polyphénol aromatique selon l'invention de la composition I1 est tel que R₁=R₂=R₃=CH₃ et présente la formule (**5**) suivante :

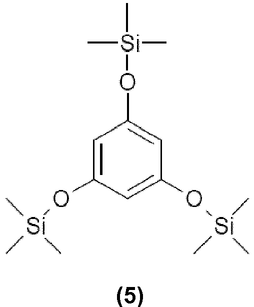

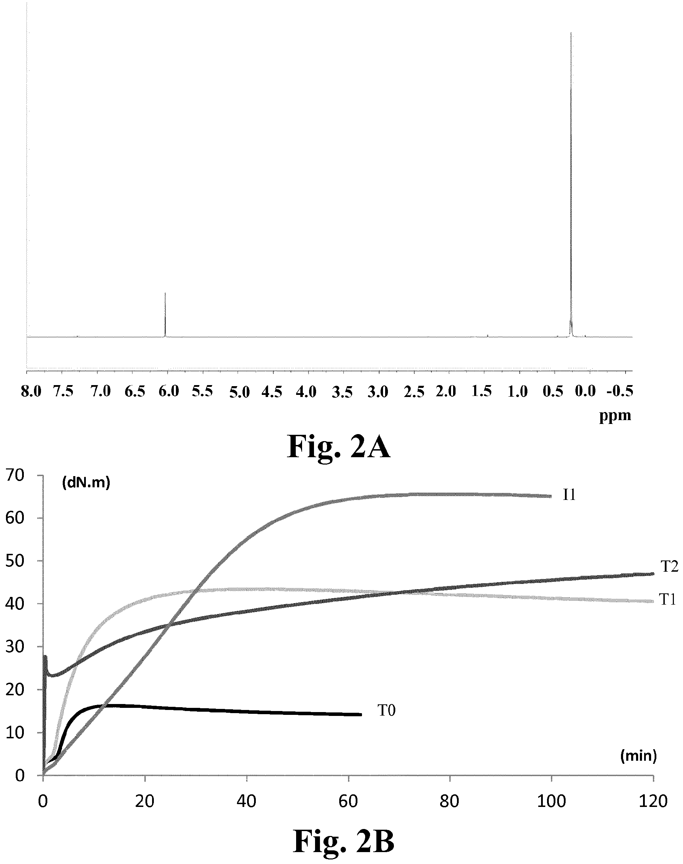

Le dérivé de polyphénol aromatique (5) est préparé à partir de phloroglucinol (CAS 108-73-6) et de chlorure de triméthylsilyle (CAS 75-77-4) (LG-Si(R₁R₂R₃) avec LG=Cl et R₁=R₂=R₃=Méthyle) en présence d'une base organique. Ainsi, par exemple, on dissout 40 g de phloroglucinol dans 800 mL de chloroforme. Puis, on ajoute ensuite 109 g de triéthylamine. Puis on ajoute au goutte-à-goutte 107 g de chlorure de triméthylsilyle ClSi(CH₃)₃ au milieu réactionnel à température ambiante. On laisse le tout à température ambiante sous agitation pendant 3 heures. Puis, on acidifie le mélange réactionnel avec une solution aqueuse d'acide chlorhydrique à 37%. Puis, on réalise deux lavages à l'eau. Le produit final est finalement récupéré après séchage sur sulfate de sodium anhydre, filtration et évaporation du solvant. On obtient 150 g du dérivé de polyphénol aromatique (**5**) sous la forme d'un liquide brun. Le spectre RMN ¹H du dérivé de polyphénol aromatique (**5**) est représenté sur la figure 2A (RMN ¹H (CDCl₃, 300 MHz) : 6.03 (3H, s), 0.27 (27H, s)).

Le dérivé de polyphénol aromatique de la composition I2 est tel que R₁=R₂=CH₃, R₃=CH=CH₂ et présente la formule (**6**) suivante :

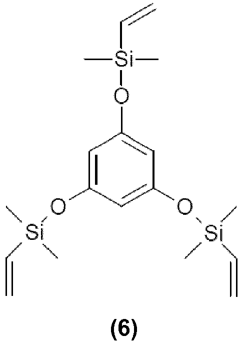

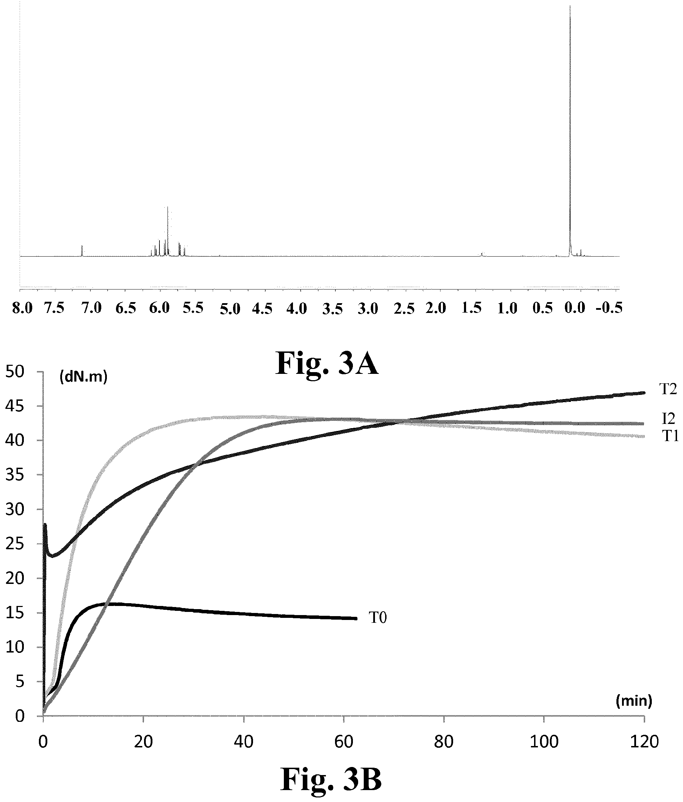

Le dérivé de polyphénol aromatique (**6**) est préparé d'une façon analogue au dérivé de polyphénol aromatique (**5**) à partir du phloroglucinol (CAS 108-73-6) et du chlorure de diméthylvinylsilyle (CAS 1719-58-0) (LG-Si(R₁R₂R₃) avec LG=Cl et R₁=R₂=Méthyle et R₃=CH=CH₂). Le spectre RMN ¹H du dérivé de polyphénol aromatique (**6**) est représenté sur la figure 3A (RMN ¹H (CDCl₃, 300 MHz) : 6.15-5.60 (9H, m), 5.89 (3H, s), 0.15 (18H, s)).

Le dérivé de polyphénol aromatique de la composition I3 est tel que R₁=CH₃, R₂=R₃=C₆H₆ et présente la formule (**7**) suivante :

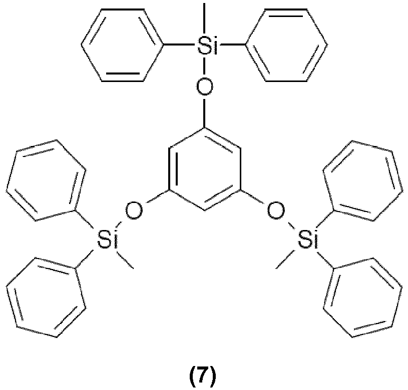

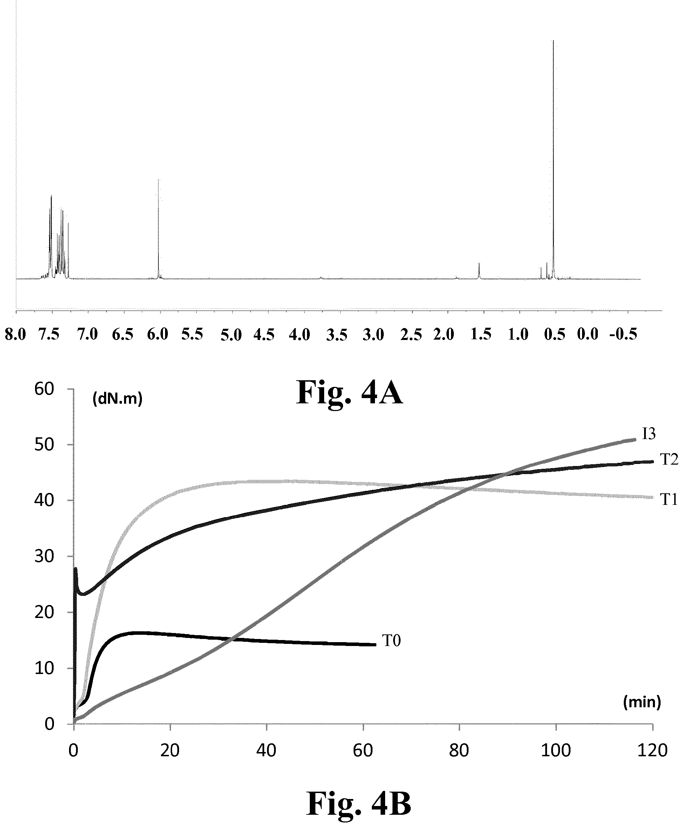

Le dérivé de polyphénol aromatique (**7**) est préparé d'une façon analogue au dérivé de polyphénol aromatique (**5**) à partir du phloroglucinol (CAS 108-73-6) et du chlorure de méthyldiphénylsilyle (CAS 144-79-6) (LG-Si(R₁R₂R₃) avec LG=Cl et R₁=Méthyle et R₂=R₃=C₆H₅). Le spectre RMN ¹H du dérivé de polyphénol aromatique (7) est représenté sur la figure 4A (RMN ¹H (CDCl₃, 300 MHz) : 7.70-7.30 (30H, m), 6.03 (3H, s), 0.59 (9H, s)).

### Aldéhyde des compositions I1 à I3

Chaque aldéhyde de chaque composition I1 à I3 est un aldéhyde préférentiellement aromatique et est choisi dans le groupe constitué par le 1,3-benzène-dicarboxaldéhyde, le 1,4-benzène-dicarboxaldéhyde, un aldéhyde de formule (A) : 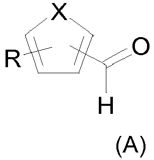 dans laquelle :
X comprend N, S ou O
R représente -H ou -CHO
et les mélanges de ces composés.

En l'espèce, l'aldéhyde est choisi dans le groupe constitué par le 1,4-benzène-dicarboxaldéhyde, le furfuraldéhyde, le 2,5-furanedicarboxaldéhyde et les mélanges de ces composés. Ici, l'aldéhyde de chaque composition I1 à I3 est le 1,4-benzène-dicarboxaldéhyde.

### Essais comparatifs

Dans une première étape, on a incorporé à un élastomère la charge renforçante, en malaxant thermomécaniquement le tout, jusqu'à atteindre une température maximale comprise entre 110°C et 190°C. Puis on a refroidit l'ensemble à une température inférieure à 110°C. Ensuite, on a incorporé, au cours d'une seconde étape, le système de réticulation, le phénol, le polyphénol aromatique ou le dérivé de polyphénol aromatique selon l'invention et l'aldéhyde. A l'issue de cette seconde étape, on a chauffé le mélange à 150°C jusqu'à l'obtention du couple rhéométrique maximum afin de vulcaniser la composition et réticuler la résine phénol-aldéhyde. Puis, on a réalisé une caractérisation de la rigidité à 23°C de la composition lors d'un essai en traction.

### Caractérisation de la phase retard et de la rigidité à haute température - Couple rhéométrique maximum

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la vulcanisation et de la réticulation de la résine phénol-aldéhyde. De l'évolution du couple rhéométrique, on détermine la présence d'une phase retard lorsque l'augmentation du couple rhéométrique sur 10 minutes de la composition testée est inférieure à l'augmentation du couple rhéométrique sur 10 minutes d'une composition témoin comprenant le polyphénol aromatique correspondant et le même aldéhyde, ici la composition T2. La présence d'une telle phase retard est indiquée dans le tableau 1. On a représenté sur les figures 2B à 4B chaque courbe représentant l'évolution du couple rhéométrique respectivement des compositions I1 à I3 ainsi que celles représentant l'évolution du couple rhéométrique des compositions T0, T1 et T2.

Plus le couple rhéométrique maximum Cmax est élevé, plus la composition présente une rigidité pouvant être maintenue à haute température.

### Caractérisation de la rigidité à 23°C - Essai de traction

Ces essais permettent de déterminer les contraintes d'élasticité et les propriétés à la rupture. Sauf indication différente, ils sont effectués conformément à la norme ASTM D 412 de 1998 (éprouvette C). On mesure en seconde élongation (i.e. après un cycle d'accommodation) les modules sécants dits "nominaux" (ou contraintes apparentes, en MPa) à 10% d'allongement (noté "MA10"). Toutes ces mesures de traction sont effectuées dans les conditions normales de température et d'hygrométrie, selon la norme ASTM D 1349 de 1999 et reportées dans le tableau 1.

Tout d'abord, les résultats du tableau 1 montrent que l'utilisation d'un polyphénol aromatique et d'un aldéhyde dans la composition témoin T2 permet d'obtenir une rigidité à 23°C bien plus élevée que celle d'une composition dépourvue de résine renforçante (T0) mais également que celle d'une composition comprenant une résine renforçante de l'état de la technique (T1). Toutefois, la composition T2 ne présente pas de phase retard de sorte que la résine phénol-aldéhyde de la composition T2 réticule de façon précoce.

En plus de sa phase retard, chaque composition selon l'invention I1 à I3 présente une rigidité à 23°C équivalente voire supérieure à celle de la composition T1. De plus, à l'inverse de T1, chaque composition I1 à I3 ne produit pas de formaldéhyde au cours de sa vulcanisation.

Chaque composition I1 à I3 présente une phase retard et une rigidité qui, bien qu'inférieure à celle de la composition T2 dans certains exemples décrits, est suffisante pour permettre un renforcement de la composition de caoutchouc. En outre, cette rigidité peut être augmentée en modifiant d'autres paramètres comme les taux de dérivé de polyphénol aromatique selon l'invention et d'aldéhyde utilisés.

Chaque composition I1 à I3 présente une tenue de la rigidité à des températures élevées (Cmax) améliorée par rapport à la tenue de la composition T0. De plus, les compositions I1 à I3 présentent une tenue de la rigidité à des températures élevées (Cmax) au moins égale (I2) voire significativement supérieure (I1 et I3) à celle de la composition T1.

On notera également que la phase retard et la rigidité à 23°C peuvent être choisies en fonctions de l'application en faisant varier le groupe -O-Z et notamment les groupes R₁, R₂ et R₃.

L'invention ne se limite pas aux modes de réalisation décrits précédemment.

Dans d'autres modes de réalisation non présents dans le tableau 1, on pourra envisager des dérivés de polyphénol aromatique comprenant plusieurs noyaux aromatiques, par exemple benzéniques, au moins deux d'entre eux étant chacun porteur d'au moins deux groupes -O-Z en position méta l'un par rapport à l'autre. Les deux positions ortho d'au moins un des groupes -O-Z de chaque noyau aromatique sont non substituées.

On pourra exploiter un dérivé de polyphénol aromatique comprenant au moins un noyau aromatique porteur d'au moins deux groupes -O-Z en position méta l'un par rapport à l'autre, les deux positions ortho d'au moins un des groupes -O-Z étant non substituées et dans lequel chaque groupe -O-Z représente un groupe -O-Si(R₁R₂R₃) avec R₁, R₂, R₃ représentant, indépendamment l'un de l'autre, un radical hydrocarboné ou un radical hydrocarboné substitué en l'utilisant pour générer une phase retard lors de la réticulation d'une résine phénol-aldéhyde à base du dérivé de polyphénol aromatique et d'un aldéhyde indépendamment de son utilisation pour la fabrication d'une résine phénol-aldéhyde de renforcement d'une composition de caoutchouc.

Les caractéristiques du dérivé de polyphénol aromatique et de l'aldéhyde décrites ci-dessus s'appliquent également à cette utilisation pour générer une phase retard lors de la réticulation de la résine phénol-aldéhyde.

On pourra exploiter, dans certains modes de réalisation, un dérivé de polyphénol aromatique comprenant au moins un noyau aromatique porteur d'au moins deux groupes - O-Z en position méta l'un par rapport à l'autre, les deux positions ortho d'au moins un des groupes -O-Z étant non substituées et dans lequel chaque groupe -O-Z représente un groupe -O-Si(R₁R₂R₃) avec R₁, R₂, R₃ représentant, indépendamment l'un de l'autre, un radical hydrocarboné ou un radical hydrocarboné substitué en l'utilisant dans une résine phénol-aldéhyde pour maintenir la rigidité d'une composition de caoutchouc avec l'augmentation de la température indépendamment de son utilisation pour la fabrication d'une résine phénol-aldéhyde de renforcement d'une composition de caoutchouc.

Les caractéristiques du dérivé de polyphénol aromatique et de l'aldéhyde décrites ci-dessus s'appliquent également à cette utilisation dans une résine phénol-aldéhyde pour maintenir la rigidité de la composition de caoutchouc avec l'augmentation de la température.

**Tableau 1**

| **composition** | **Phénol** | **Donneur de méthylène** | **Phase retard** | **MA10 (MPa)** | **Cmax (dN.m)** |
|---|---|---|---|---|---|
| T0 | / | / | / | 7,4 | 16 |
| T1 | Résine SRF (1) | Hexa-méthylènetétramine (2) | Non | 16,5 | 43 |

| **Composition** | **Polyphénol aromatique** | **Aldéhyde** | **Phase retard** | **MA10 (MPa)** | **Cmax (dN.m)** |
|---|---|---|---|---|---|
| T2 | Phloroglucinol (3) | 1,4-benzènedicarboxaldéhyde (4) | Non | 33,5 | 46 |

| **Composition** | **Dérivé de polyphénol aromatique Z=Si(R₁R₂R₃)** | **Aldéhyde** | **Phase retard** | **MA10 (MPa) Cmax** | **Cmax (dN.m)** |
|---|---|---|---|---|---|
| I1 | R₁=R₂=R₃=CH₃ (5) | 1,4-benzènedicarboxaldéhyde (4) | Oui | 24,9 | 65 |
| I2 | R₁=R₂=CH₃, R₃=CH=CH₂ (6) | 1,4-benzènedicarboxaldéhyde (4) | Oui | 23,8 | 43 |
| I3 | R₁=CH₃, R₂=R₃=C₆H₅ (7) | 1,4-benzènedicarboxaldéhyde (4) | Oui | 16,6 | 50 |

| | | | | | |
|---|---|---|---|---|---|
| (1) Hexa-méthylènetétramine (de la société Sigma-Aldrich ; de pureté ≥ 99%) ; (2) Résine précondensée SRF 1524 (de la société Schenectady ; diluée à 75%); (3) Phloroglucinol (de la société Alfa Aesar ; de pureté 99%) ; (4) 1,4-benzènedicarboxaldéhyde (de la société ABCR ; de pureté 98%). | | | | | |

## Revendications

1. Utilisation d'un dérivé de polyphénol aromatique comprenant au moins un noyau aromatique porteur d'au moins deux groupes -O-Z en position méta l'un par rapport à l'autre, les deux positions ortho d'au moins un des groupes -O-Z étant non substituées et dans lequel chaque groupe -O-Z représente un groupe -O-Si(R₁R₂R₃) avec R₁, R₂, R₃ représentant, indépendamment l'un de l'autre, un radical hydrocarboné ou un radical hydrocarboné substitué pour la fabrication d'une résine phénol-aldéhyde de renforcement d'une composition de caoutchouc.

2. Utilisation d'un dérivé de polyphénol aromatique selon la revendication précédente pour générer une phase retard lors de la réticulation de la résine phénol-aldéhyde à base du dérivé de polyphénol aromatique et d'un aldéhyde.

3. Utilisation d'un dérivé de polyphénol aromatique selon l'une quelconque des revendications précédentes, dans une résine phénol-aldéhyde pour maintenir la rigidité d'une composition de caoutchouc avec l'augmentation de la température.

4. Utilisation d'un dérivé de polyphénol aromatique selon la revendication 2 ou 3, dans laquelle l'aldéhyde est un aldéhyde aromatique.

5. Utilisation d'un dérivé de polyphénol aromatique selon la revendication 4, dans laquelle l'aldéhyde aromatique est choisi dans le groupe constitué par le 1,3-benzène-dicarboxaldéhyde, le 1,4-benzène-dicarboxaldéhyde, un aldéhyde de formule (A) : 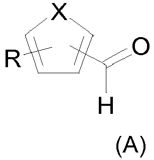 dans laquelle :
X comprend N, S ou O
R représente -H ou -CHO
et les mélanges de ces composés.

6. Utilisation d'un dérivé de polyphénol aromatique selon la revendication 4 ou 5, dans laquelle l'aldéhyde aromatique est choisi dans le groupe constitué par le 1,4-benzène-dicarboxaldéhyde, le furfuraldéhyde, le 2,5-furanedicarboxaldéhyde et les mélanges de ces composés.

7. Utilisation d'un dérivé de polyphénol aromatique selon l'une quelconque des revendications précédentes, dans laquelle chaque groupe R₁, R₂, R₃ représente, indépendamment l'un de l'autre, un radical choisi dans le groupe constitué par les radicaux alkyle, aryle, arylalkyle, alkylaryle, cycloalkyle, alcényle..

8. Utilisation d'un dérivé de polyphénol aromatique selon l'une quelconque des revendications 1 à 7, dans laquelle chaque groupe R₁, R₂, R₃ représente, indépendamment l'un de l'autre, un radical choisi dans le groupe constitué par les radicaux méthyle, éthyle, propyle, phényle, allyle, vinyle..

9. Utilisation d'un dérivé de polyphénol aromatique selon l'une quelconque des revendications 1 à 7, dans laquelle chaque groupe R₁, R₂, R₃ représente, indépendamment l'un de l'autre, un radical choisi dans le groupe constitué par les radicaux méthyle, éthyle, propyle, butyle, allyle, vinyle.

10. Utilisation d'un dérivé de polyphénol aromatique selon l'une quelconque des revendications précédentes, dans laquelle le noyau aromatique est porteur de trois groupes -O-Z en position méta les uns par rapport aux autres.

11. Utilisation d'un dérivé de polyphénol aromatique selon l'une quelconque des revendications précédentes, dans laquelle les deux positions ortho de chaque groupe -O-Z sont non substituées

12. Utilisation d'un dérivé de polyphénol aromatique selon l'une quelconque des revendications précédentes, dans laquelle le ou chaque noyau aromatique est un noyau benzénique.

13. Utilisation d'un dérivé de polyphénol aromatique selon l'une quelconque des revendications précédentes, dans laquelle le dérivé de polyphénol aromatique est choisi dans le groupe constitué par les dérivés de polyphénol aromatique (I), (II) (IV) et (V) de formules suivantes : 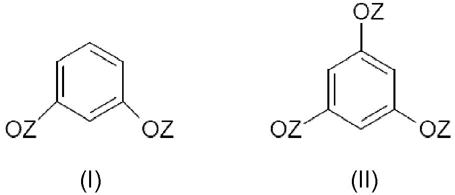 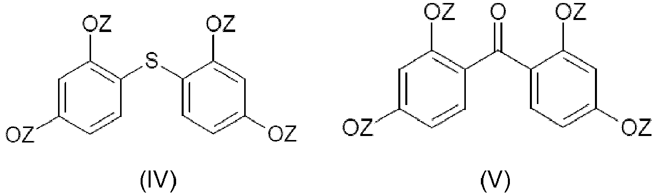 et les mélanges de ces dérivés de polyphénol aromatique.

14. Utilisation d'un dérivé de polyphénol aromatique selon l'une quelconque des revendications 1 à 12, dans laquelle le dérivé de polyphénol aromatique est une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé comprenant au moins une fonction aldéhyde, les fonctions hydroxyles de la résine pré-condensée restées réactives à l'issue de la condensation de la résine pré-condensée étant substituées par des groupes -O-Z.

15. Utilisation d'un dérivé de polyphénol aromatique selon la revendication précédente, dans laquelle le composé comprenant au moins une fonction aldéhyde est choisi dans le groupe constitué par le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de composés.

## Patentansprüche

1. Verwendung eines aromatischen Polyphenolderivats mit mindestens einem aromatischen Kern, der mindestens zwei -O-Z-Gruppen in meta-Position zueinander trägt, wobei die beiden ortho-Positionen zu mindestens einer der -O-Z-Gruppen unsubstituiert sind und wobei jede -O-Z-Gruppe für eine -O-Si(R₁R₂R₃)-Gruppe steht, wobei R₁, R₂ und R₃ unabhängig voneinander für einen Kohlenwasserstoffrest oder einen substituierten Kohlenwasserstoffrest stehen, zur Herstellung eines Phenol-Aldehyd-Harzes zur Verstärkung einer Kautschukzusammensetzung.

2. Verwendung eines aromatischen Polyphenolderivats nach dem vorhergehenden Anspruch zur Erzeugung einer Verzögerungsphase bei der Vernetzung des Phenol-Aldehyd-Harzes auf Basis des aromatischen Polyphenolderivats und eines Aldehyds.

3. Verwendung eines aromatischen Polyphenolderivats nach einem der vorhergehenden Ansprüche in einem Phenol-Aldehyd-Harz zur Aufrechterhaltung der Steifigkeit einer Kautschukzusammensetzung bei Erhöhung der Temperatur.

4. Verwendung eines aromatischen Polyphenolderivats nach Anspruch 2 oder 3, wobei es sich bei dem Aldehyd um einen aromatischen Aldehyd handelt.

5. Verwendung eines aromatischen Polyphenolderivats nach Anspruch 4, wobei der aromatische Aldehyd aus der Gruppe bestehend aus 1,3-Benzoldicarboxaldehyd, 1,4-Benzoldicarboxaldehyd, einem Aldehyd der Formel (A): 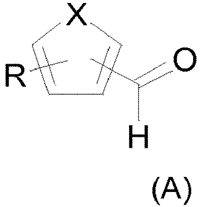 in der:
X für N, S oder O steht,
R für -H oder -CHO steht,
und Mischungen dieser Verbindungen ausgewählt ist.

6. Verwendung eines aromatischen Polyphenolderivats nach Anspruch 4 oder 5, wobei der aromatische Aldehyd aus der Gruppe bestehend aus 1,4-Benzoldicarboxaldehyd, Furfuraldehyd, 2,5-furandicarboxaldehyd und Mischungen dieser Verbindungen ausgewählt ist.

7. Verwendung eines aromatischen Polyphenolderivats nach einem der vorhergehenden Ansprüche, wobei jede Gruppe R₁, R₂ und R₃ unabhängig voneinander für einen Rest aus der Gruppe bestehend aus Alkyl-, Aryl-, Arylalkyl-, Alkylaryl-, Cycloalkyl- und Alkenylresten steht.

8. Verwendung eines aromatischen Polyphenolderivats nach einem der Ansprüche 1 bis 7, wobei jede Gruppe R₁, R₂ und R₃ unabhängig voneinander für einen Rest aus der Gruppe bestehend aus Methyl-, Ethyl-, Propyl-, Phenyl-, Allyl- und Vinylresten steht.

9. Verwendung eines aromatischen Polyphenolderivats nach einem der Ansprüche 1 bis 7, wobei jede Gruppe R₁, R₂ und R₃ unabhängig voneinander für einen Rest aus der Gruppe bestehend aus Methyl-, Ethyl-, Propyl-, Butyl-, Allyl- und Vinylresten steht.

10. Verwendung eines aromatischen Polyphenolderivats nach einem der vorhergehenden Ansprüche, wobei der aromatische Kern drei -O-Z-Gruppen in meta-Position zueinander trägt.

11. Verwendung eines aromatischen Polyphenolderivats nach einem der vorhergehenden Ansprüche, wobei die beiden ortho-Positionen zu jeder -O-Z-Gruppe unsubstituiert sind.

12. Verwendung eines aromatischen Polyphenolderivats nach einem der vorhergehenden Ansprüche, wobei es sich bei dem bzw. jedem aromatischen Kern um einen Benzolkern handelt.

13. Verwendung eines aromatischen Polyphenolderivats nach einem der vorhergehenden Ansprüche, wobei das aromatische Polyphenolderivat aus der Gruppe bestehend aus den aromatischen Polyphenolderivaten (I), (II), (IV) und (V) der folgenden Formeln: 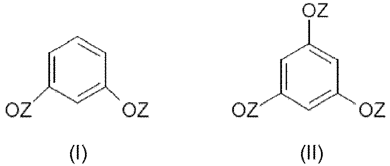 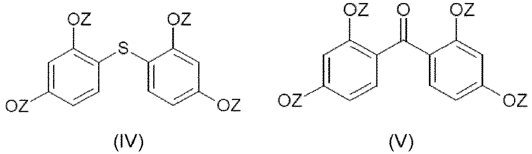 und Mischungen dieser aromatischen Polyphenolderivate ausgewählt ist.

14. Verwendung eines aromatischen Polyphenolderivats nach einem der Ansprüche 1 bis 12, wobei es sich bei dem aromatischen Polyphenolderivat um ein vorkondensiertes Harz auf Basis von:
- mindestens einem aromatischen Polyphenol mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind; und
- mindestens einer Verbindung mit mindestens einer Aldehydfunktion handelt, wobei die am Ende der Kondensation des vorkondensierten Harzes reaktiv bleibenden Hydroxylfunktionen durch -O-Z-Gruppen substituiert sind.

15. Verwendung eines aromatischen Polyphenolderivats nach dem vorhergehenden Anspruch, wobei die Verbindung mit mindestens einer Aldehydfunktion aus der Gruppe bestehend aus Formaldehyd, Benzaldehyd, Furfuraldehyd, 2,5-Furandicarboxaldehyd, 1,4-Benzoldicarboxaldehyd, 1,3-Benzoldicarboxaldehyd, 1,2-Benzoldicarboxaldehyd und Mischungen dieser Verbindungen ausgewählt ist.

## Claims

1. Use of an aromatic polyphenol derivative comprising at least one aromatic ring bearing at least two -O-Z groups in the meta position relative to one another, the two positions ortho to at least one of the -O-Z groups being unsubstituted, and in which each -O-Z group represents an -O-Si(R₁R₂R₃) group with R₁, R₂, R₃ representing, independently of one another, a hydrocarbon-based radical or a substituted hydrocarbon-based radical, for the manufacture of a phenol-aldehyde resin for reinforcing a rubber composition.

2. Use of an aromatic polyphenol derivative according to the preceding claim, for generating a delay phase during the crosslinking of the phenol-aldehyde resin based on the aromatic polyphenol derivative and on an aldehyde.

3. Use of an aromatic polyphenol derivative according to either one of the preceding claims, in a phenol-aldehyde resin to maintain the stiffness of a rubber composition with the increase in the temperature.

4. Use of an aromatic polyphenol derivative according to Claim 2 or 3, in which the aldehyde is an aromatic aldehyde.

5. Use of an aromatic polyphenol derivative according to Claim 4, in which the aromatic aldehyde is selected from the group consisting of 1,3-benzenedicarboxaldehyde, 1,4-benzenedicarboxaldehyde and an aldehyde of formula (A): 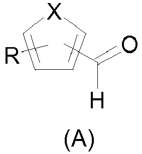 in which:
X comprises N, S or O,
R represents -H or -CHO,
and the mixtures of these compounds.

6. Use of an aromatic polyphenol derivative according to Claim 4 or 5, in which the aromatic aldehyde is selected from the group consisting of 1,4-benzenedicarboxaldehyde, furfuraldehyde, 2,5-furandicarboxaldehyde and the mixtures of these compounds.

7. Use of an aromatic polyphenol derivative according to any one of the preceding claims, in which each R₁, R₂, R₃ group represents, independently of one another, a radical selected from the group consisting of alkyl, aryl, arylalkyl, alkylaryl, cycloalkyl and alkenyl radicals.

8. Use of an aromatic polyphenol derivative according to any one of Claims 1 to 7, in which each R₁, R₂, R₃ group represents, independently of one another, a radical selected from the group consisting of methyl, ethyl, propyl, phenyl, allyl and vinyl radicals.

9. Use of an aromatic polyphenol derivative according to any one of Claims 1 to 7, in which each R₁, R₂, R₃ group represents, independently of one another, a radical selected from the group consisting of methyl, ethyl, propyl, butyl, allyl and vinyl radicals.

10. Use of an aromatic polyphenol derivative according to any one of the preceding claims, in which the aromatic ring bears three -O-Z groups in the meta position relative to one another.

11. Use of an aromatic polyphenol derivative according to any one of the preceding claims, in which the two positions ortho to each -O-Z group are unsubstituted.

12. Use of an aromatic polyphenol derivative according to any one of the preceding claims, in which the, or each, aromatic ring is a benzene ring.

13. Use of an aromatic polyphenol derivative according to any one of the preceding claims, in which the aromatic polyphenol derivative is selected from the group consisting of the aromatic polyphenol derivatives (I), (II), (IV) and (V) of the following formulae: 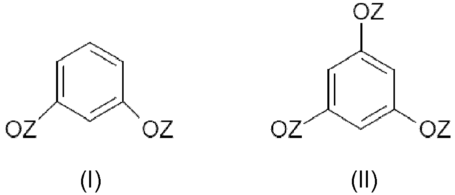 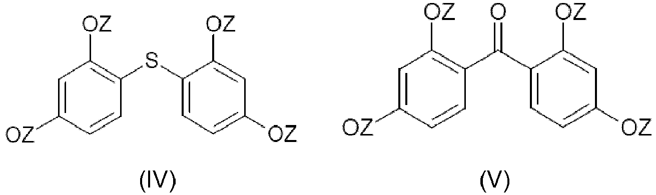 and the mixtures of these aromatic polyphenol derivatives.

14. Use of an aromatic polyphenol derivative according to any one of Claims 1 to 12, in which the aromatic polyphenol derivative is a pre-condensed resin based:
- on at least one aromatic polyphenol comprising at least one aromatic ring bearing at least two hydroxyl functions in the meta position relative to one another, the two positions ortho to at least one of the hydroxyl functions being unsubstituted; and
- on at least one compound comprising at least one aldehyde function, the hydroxyl functions of the pre-condensed resin that remained reactive at the end of the condensation of the pre-condensed resin being substituted by -O-Z groups.

15. Use of an aromatic polyphenol derivative according to the preceding claim, in which, the compound comprising at least one aldehyde function is selected from the group consisting of formaldehyde, benzaldehyde, furfuraldehyde, 2,5-furandicarboxaldehyde, 1,4-benzenedicarboxaldehyde, 1,3-benzenedicarboxaldehyde, 1,2-benzenedicarboxaldehyde and the mixtures of these compounds.
